# EUROPEAN PATENT SPECIFICATION

(11) **EP 2 266 367 B1**
(45) Date of publication and mention of the grant of the patent: **27.01.2016**
(21) Application number: 08873968.5
(22) Date of filing: 15.10.2008
(51) Int. Cl.: H04W 88/06

(54) **GATEWAY WITH ADAPTIVE AIR INTERFACES**
GATEWAY MIT ADAPTIVEN FUNKSCHNITTSTELLEN
PASSERELLE À INTERFACES AÉRIENNES ADAPTATIVES

(30) Priority: 15.04.2008 US 103363
(43) Date of publication of application: 29.12.2010
(73) Proprietor: Sony Mobile Communications AB, 221 88 Lund (SE)
(72) Inventor: CAMP, JR., William, O., Chapel Hill North Carolina 27514 (US); LIU, Charles, Chapel Hill North Carolina 27514 (US); MARCINKIEWICZ, Walter, M., Chapel Hill North Carolina 27517 (US); SCHOPPE, Donald, W., Apex North Carolina 27523 (US); COLE, Gary, Cary North Carolina 27511 (US)
(74) Representative: Zacco Sweden AB
(86) International application number: PCT/US2008/079941
(87) International publication number: WO 2009/128858

(56) References cited:
- EP-A- 1 679 917
- US-A1- 2005 094 589
- US-A1- 2007 121 536
- US-A1- 2007 142 098
- US-A1- 2007 159 998

## Description

### TECHNICAL FIELD OF THE INVENTION

The present invention relates generally to electronic devices, such as electronic devices for engaging in voice communications. More particularly, the invention relates to a system, device and method that automatically selects an optimum communication means for communicating data between two devices.

### DESCRIPTION OF THE RELATED ART

Many different wireless communication technologies can now be used to provide wireless voice and data communication. Multi-mode wireless terminals have been developed that can communicate with, for example, Global System for Mobile Communications systems (GSM), Enhanced Data Rates for GSM Evolution (EDGE), ANSI-136 systems, Advanced Mobile Phone Service systems, Code Division Multiple Access systems, Bluetooth systems, and Wireless Local Area Network systems. In some geographic areas, each of these wireless communication systems may be available for use by wireless terminals.

Existing gateway solutions for accessing a communication network include cellular femtocells and WiFi access points. A femtocell is a low power cellular base station typically designed for use in residential or small business environments. The femtocell includes a low-power cellular air interface, and a broadband interface. The broadband interface connects to a service provider's network, and an electronic device, such as a mobile phone or other communication device, communicates to the femtocell using a normal cellular air interface. The femtocell bridges the wireless air interface and the broadband interface, thereby enabling the electronic device to communicate over the network. From the view point of the electronic device, the femtocell may appear as another radio base station of a wide area network.

A WiFi access point is a device that connects wireless communication devices together to form a wireless network. The WiFi access point may include a wireless interface based on the 802.11x standard, for example, and also can may include a broadband interface. Like the femtocell, the broadband interface connects to the service provider's network, and the electronic device communicates with the access point via the wireless interface. The WiFi access point bridges the wireless interface and the broadband interface, thereby enabling the electronic device to communicate over the network. US 2007/121536 A1 discloses a mobile communication terminal having cellular transceiver, slower but requiring less energy and a WLAN transceiver, faster but with a higher battery consumption.

US 2005/094589 A1 discloses a multi-mode wireless terminal arranged to selectively provide power to the wireless transceivers.

US 2007/142098 A1 discloses a power saving arrangement for multi-mode wireless terminals.

US 2007/159998 A1 discloses a method for selecting a radio protocol in a multi-mode wireless terminal based on a power and a data rate constraints.

### SUMMARY

A cellular air interface provides an efficient means in which to conduct voice communications. A problem with the cellular air interface, however, is that due to limited spectrum opportunities, the air interface may be limited to GSM or EDGE. As a result, data throughput may be less than that of a typical broadband connection. While this lower throughput is sufficient for voice communications, it may pose limitations for internet use.

Data throughput on WiFi networks (or other high speed networks) is generally greater than that of cellular air interfaces. However, this added speed comes by way of additional hardware (the electronic device, in addition to the cellular air interface, also requires a WiFi interface). Moreover, WiFi interfaces typically consume significantly more power than that of cellular air interfaces.

A wireless terminal according to the subject-matter of independent Claim 1, a system according to the subject-matter of independent Claim 6 and a method according to the subject-matter of independent Claim 9 enable wireless communications with both low power operation and high data throughput. This is accomplished, for example, by implementing the various wireless options within a single device (e.g., a gateway and/or electronic device that include(s) a multi-mode radio and optionally a multi-band radio). The gateway and/or electronic device, for example, can control the respective radio transceivers of the multi-mode, multi-band radio as a group. In other words, the respective radio transceivers can be commanded by a common controller that selects the best transceiver for the specific application. In this manner, transceivers that are not used can be powered down until they are needed. An enable or disable command may be communicated between the gateway and electronic device via a low power transceiver, which is maintained in an enabled (i.e., powered) state.

According to one aspect of the invention, a wireless terminal includes: a multi-mode radio circuit including a plurality of different transceivers for communicating over a plurality of different wireless standards, wherein a first transceiver of the plurality of transceivers requires less power than other transceivers of the plurality of transceivers; a processor and memory; and logic stored in memory and executable by the processor, said logic including logic that selects a transceiver of the plurality of transceivers based on characteristics of a communication request; and logic that uses the first transceiver to communicate the selected transceiver to a receiving device.

According to one aspect of the invention, the terminal further includes logic that commands removal of power from the other transceivers while other transceivers are not in use.

According to one aspect of the invention, the terminal further includes: logic that commands application of power to the selected transceiver; and logic that transmits the data to the receiving device via the selected transceiver.

According to one aspect of the invention, the logic that selects the transceiver includes logic that analyzes the communication request to determine a minimum speed requirement for communicating the data and selects the transceiver based on the minimum speed requirement.

According to one aspect of the invention, the first transceiver is a time division multiple access (TDMA) transceiver.

According to one aspect of the invention, the other transceivers are at least one of a code division multiple access (CDMA) transceiver, a WiFi transceiver, or a Bluetooth transceiver.

According to one aspect of the invention, the terminal further includes a broadband interface for connecting to a network.

According to one aspect of the invention, the terminal is a gateway operative to provide access to the network.

According to one aspect of the invention, the gateway is a femtocell or a wireless access point.

According to one aspect of the invention, the terminal is at least one of a mobile phone, pager, electronic organizer, personal digital assistant, or smartphone.

According to one aspect of the invention, a system for minimizing power consumption in portable electronic devices includes: a wireless gateway for providing access to a network, said gateway including a first multi-mode radio circuit; a portable electronic device including a second multi-mode radio circuit, wherein the first and second radio circuits each include a plurality of transceivers, and one transceiver of each of the first and second radio circuits requires less power than respective other transceivers of the first and second radio circuits, and wherein at least one of the gateway or the portable electronic device is operative to a) select a transceiver of the respective plurality of transceivers based on characteristics of a communication request; and b) communicate the selected transceiver to the other of the gateway or the portable electronic device via the respective one transceiver.

According to one aspect of the invention, at least one of the gateway or the portable electronic device is operative to c) remove power from the respective other transceivers while the other transceivers are not in use.

According to one aspect of the invention, at least one of the gateway or the portable electronic device is operative to d) command application of power to the selected transceiver; and e) transmit the data to the other of the gateway or the portable electronic device via the selected transceiver.

According to one aspect of the invention, at least one of the gateway or the portable electronic device is operative to analyze the communication request to determine a minimum speed requirement for communicating the data and selects the transceiver based on the minimum speed requirement.

According to one aspect of the invention, the one transceiver is a time division multiple access (TDMA) transceiver.

According to one aspect of the invention, the other transceivers are at least one of a code division multiple access (CDMA) transceiver, a WiFi transceiver, or a Bluetooth transceiver.

According to one aspect of the invention, the gateway comprises a broadband interface for connecting to a network.

According to one aspect of the invention, the gateway is a femtocell or a wireless access point.

According to one aspect of the invention, the portable electronic device is at least one of a mobile phone, pager, electronic organizer, personal digital assistant, or smartphone.

According to one aspect of the invention, a method of minimizing power consumption in a terminal that includes a multi-mode radio circuit having a plurality of different transceivers for communicating over a plurality of different wireless standards, wherein a first transceiver of the plurality of transceivers requires less power than other transceivers of the plurality of transceivers, the method including: selecting a transceiver of the plurality of transceivers based on characteristics of a communication request; and using the first transceiver to communicate the selected transceiver to a receiving device.

According to one aspect of the invention, the method further includes removing power from the other transceivers while the other transceivers are not in use.

According to one aspect of the invention, the method further includes: applying power to the selected transceiver; and transmitting the data to the receiving device via the selected transceiver.

According to one aspect of the invention, selecting the transceiver includes analyzing the communication request to determine a minimum speed requirement for communicating the data and selecting the transceiver based on the minimum speed requirement.

According to one aspect of the invention, the method further includes using a time division multiple access (TDMA) transceiver as the first transceiver.

According to one aspect of the invention, the method further includes using at least one of a code division multiple access (CDMA) transceiver, a WiFi transceiver, or a Bluetooth transceiver as the other transceivers.

According to one aspect of the invention, the terminal is a gateway operative to provide access to the network.

According to one aspect of the invention, the gateway is a femtocell or a wireless access point.

According to one aspect of the invention, the terminal is at least one of a mobile phone, pager, electronic organizer, personal digital assistant, or smartphone.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications coming within the scope of the claims appended hereto.

Features that are described and/or illustrated with respect to one embodiment may be used in the same way or in a similar way in one or more other embodiments and/or in combination with or instead of the features of the other embodiments.

It should be emphasized that the terms "comprises" and "comprising," when used in this specification, are taken to specify the presence of stated features, integers, steps or components but do not preclude the presence or addition of one or more other features, integers, steps, components or groups thereof.

### BRIEF DESCRIPTION OF THE DRAWINGS

Figs. 1A and 1B are block diagrams illustrating exemplary communications networks including a wireless base station, radio base stations, gateways and electronic device.
Fig. 2 is a simplified block diagram of a gateway and electronic device in accordance with an embodiment of the invention.
Fig. 3 is a schematic view of a mobile telephone as an exemplary electronic device in accordance with an embodiment of the present invention.
Fig. 4 is a schematic block diagram of the relevant portions of the mobile telephone of Fig. 3 in accordance with an embodiment of the present invention.
Fig. 5 is a schematic block diagram of the relevant portions of an exemplary gateway in accordance with an embodiment of the present invention.
Fig. 6 is a flow chart of an exemplary method for using the gateway of Fig. 5 to control radio transceivers of the gateway's multi-mode, multi-band radio in accordance with an embodiment of the present invention.
Fig. 7 is a flow chart of an exemplary method for using the mobile phone of Fig. 4 to control radio transceivers of the mobile phone's multi-mode, multi-band radio in accordance with an embodiment of the present invention.

### DETAILED DESCRIPTION OF EMBODIMENTS

Embodiments of the present invention will now be described with reference to the drawings, wherein like reference numerals are used to refer to like elements throughout. It will be understood that the figures are not necessarily to scale.

The interchangeable terms "electronic equipment" and "electronic device" include portable radio communication equipment. The term "portable radio communication equipment," includes all equipment such as mobile telephones, pagers, communicators, electronic organizers, personal digital assistants (PDAs), smart phones, portable communication apparatus, portable gaming devices, portable media devices (video and/or audio), and the like. The term "gateway" includes all equipment such as femtocells, wireless access points and the like that enable or provide access to a network. The term "terminal" includes electronic devices and gateways as defined above.

In the present application, embodiments of the invention are described primarily in the context of a mobile telephone and/or a mobile telephone communication network. However, it will be appreciated that the invention is not intended to be limited to the context of a mobile telephone and may relate to any type of appropriate electronic equipment and/or network.

Portable electronic devices, such as mobile telephones, typically communicate to a service provider's communication network via a plurality of radio base stations (e.g., radio towers), wherein each radio base station is coupled to a base station controller that is in turn coupled to the service provider's main switching network. Via the radio base stations and base station controllers, the electronic device can remain in communication with the service provider's network as the electronic device moves from one region to another, thereby enabling voice communications, data exchange, etc. over a vast area.

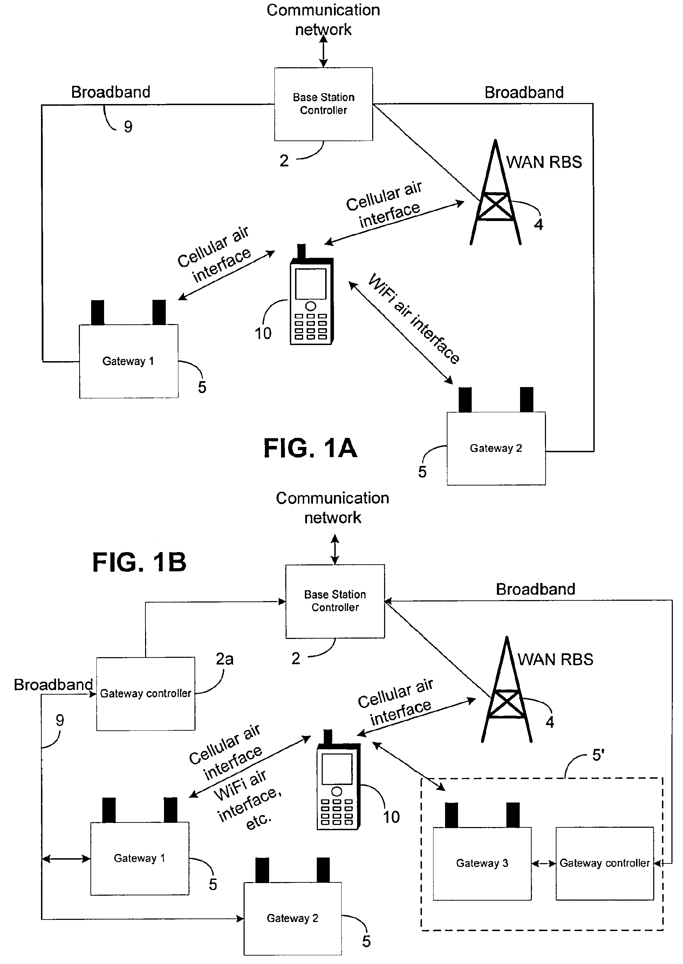

Fig. 1A illustrates an exemplary communication network that includes a base station controller 2 communicatively coupled to a radio base station 4 as is conventional. Although only a single radio base station 4 is shown, it will be appreciated that a number of radio base stations may be dispersed throughout a region to form a wide area network (WAN). Also communicatively coupled to the base station controller 2 are a plurality of gateways 5. Again, even though only two gateways 5 are shown, there may be a number of gateways communicatively coupled to the base station controller 2. The gateways 5 utilize a broadband connection 9 (preferably a wired connection) to communicate with the base station controller 2. The broadband connection 9 may be a conventional high speed data connection, and may include at least partial connections via the internet. Alternatively, the broadband connection may be a dedicated connection for use only by the gateways 5 and the base station controller 2. In accordance with the invention, the gateways 5 also include a multi-mode (and optionally a multi-band) radio, wherein selection of the particular mode and/or band can be can be implemented so as to minimize power consumption while also providing high-speed communication capabilities. Thus, for example, each gateway 5 may communicate with the other devices via any one of a number of different radio topologies. Further details regarding the gateway are provided below. An electronic device 10, such as a mobile phone or the like, communicates to the network via the radio base station 4 and/or gateways 5.

Alternatively, while the gateways 5 and the radio base station 4 are shown coupled to a common base station controller 2, other variations are possible. For example, and with reference to Fig. 1B, a gateway controller 2a, which may be communicatively coupled to the base station controller 2, may resolve a communication path from the electronic device 10 through one or more the gateways 5. Further, although the gateway controller 2a is shown separate from the two gateways 5, the controller 2a may be integral with one or more gateways 5 so as to form gateway 5'. Additional gateways 5' (with integral controllers) may be coupled to the base station controller 2 via a broadband connection, and/or additional gateways 5 (without an integral controller) may be coupled to the stand alone controller 2a or to a gateway 5' that includes an integral controller.

Communication between the electronic device 10 and the base station 2 may be via the radio base station 4, which may utilize any one of a number of different types of cellular networks, including, for example, time division multiple access (TDMA), code division multiple access (CDMA), etc. Communication via a TDMA network can be via any one of a number of different protocols, including, but not limited to, ANSI-136, global standard for mobile (GSM), general packet radio service (GPRS), enhanced data rates for GSM (EDGE), etc. Communication via a CDMA network also can be via any one of a number of different protocols including, but not limited to, CDMA (e.g., IS-95), WCDMA/HSPA, CDMA2000, etc. Communication between the electronic device 10 and the base station 2 also may be via the gateway 5 implementing any one of a number of different communication protocols, including, but not limited to, TDMA, CDMA, 802.11a, 802.11b, 802.11g, 802.1 In, and/or other protocols.

High speed interfaces, such as, for example, 802.11x based interfaces (e.g., WiFi interfaces) or the like, consume significantly more power than interfaces based on the TDMA standard. For example, the power consumption of a WiFi interface may be thirty times that of a conventional cellular air interface. In battery powered devices, such as mobile phones, the relatively high power consumption of the WiFi interface can significantly shorten battery life. Therefore, it may be desirable to remove power from the phone's transceiver associated with the high speed interface so as to prolong battery life. However, this prevents the high speed interface (and thus the device) from detecting and communicating with other devices that communicate via this interface. This is undesirable.

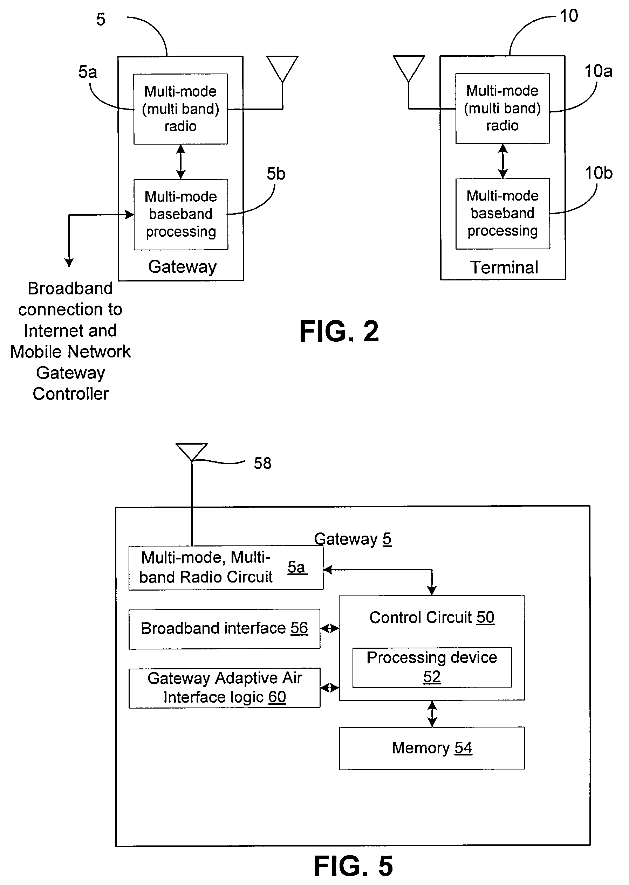

A system, device and method in accordance with the present invention enables both high speed operation and low power consumption, without affecting overall system performance. More particularly, and with reference to Fig. 2, the gateway 5 (e.g., a femtocell, wireless access point, etc.) and an electronic device 10 are configured to each include a multi-mode, multi-band radio circuit 5a and 10a, respectively, wherein the various radio transceivers of the respective multi-mode, multi-band radio circuits 5a and 10a are under the control of the gateway 5 and electronic device 10, respectively. As used herein, a multi-mode, multi-band radio is a radio that is configured to operate with a plurality of different wireless networks (e.g., TDMA, CDMA, etc.) using any one of a number of different protocols (e.g., WCDMA, GSM, EDGE, WiFi, Bluetooth, etc.).

The gateway 5 and electronic device 10 also may be configured to perform baseband processing on information that is transmitted and/or received. Such baseband processing 5b and 10b can include modulating and/or demodulating information, channel coding and/or channel decoding information, and/or may be configured to control communications according to one or more communication protocols.

The gateway 5 and electronic device 10 can operate together to select the proper radio transceiver in which to transmit and receive data. For example, when the electronic device 10 is not in use, a low power transceiver (e.g., a cellular air interface or other low power interface) is powered and listens for instructions from other devices. During this non-use state, all other radio transceivers are disabled (i.e., power is removed). Since only the low power transceiver is enabled, power consumption is minimized.

If the gateway 5 detects that an incoming communication (e.g., a communication from the network to the electronic device 10) is a voice communication, for example, then it can select the low power transceiver for communicating the voice data to the electronic device 10 (the low power transceiver is an efficient means for communicating voice data). This is true even if the voice data originated as a VoIP call. However, if the gateway 5 detects that the communication is a data communication, then the gateway 5 can select the high speed transceiver for communicating with the electronic device 10. However, since the high speed transceiver of the electronic device 10 is not powered, the electronic device 10 needs to be instructed to apply power to this transceiver before such data transfer can occur. This command can be provided via the low power transceiver (e.g., the gateway 5, via the low power transceiver, instructs the electronic device 10 to apply power to the high-speed transceiver) and then high speed data transfer may begin. Thus, the electronic device 10 can minimize power consumption while enabling high speed communications.

A similar approach is possible for communications originating with the electronic device 10. For example, the electronic device 10 may be in a low power state, wherein a low power transceiver is enabled and all other transceivers are disabled (i.e., power is removed). If a communication is originated at the electronic device 10 (e.g., a user wishes to place a VoIP or cellular call, or access the internet), then the electronic device 10 can determine the type of communication (e.g., a voice or data communication). If the communication is a voice communication, the electronic device 10 can select the low power transceiver for communicating the data to the gateway 5. However, if the electronic device 10 detects that the communication is a data communication, then the electronic device 10 can select (and apply power to) the high speed transceiver for communicating with the gateway 10.

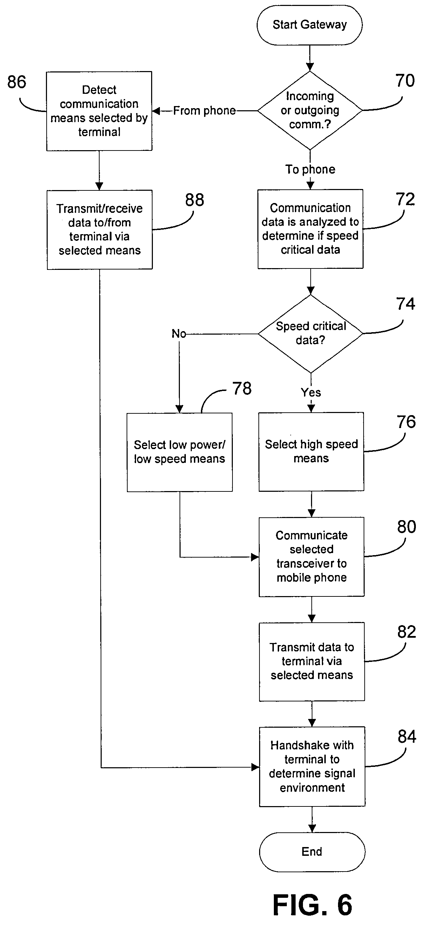

Since the gateway 5 typically is not a battery powered device, it may have all of its transceivers powered at all times. In this case, the gateway 5 can accept the data from the electronic device 10 via the high speed transceiver as soon as the electronic device transmits the data. It is possible, however, for the gateway 5 to also be in a reduced power state, wherein only the low power transceiver remains powered. If the gateway 5 is in such a state, then when the electronic device 10 is preparing to transmit data via the high speed transceiver, it can instruct the gateway 5, via the low speed transceiver, to apply power to the gateway's high speed transceiver. The gateway 5 then can apply power to the high speed transceiver and receive the transmission from the electronic device 10. Further details regarding the operation of gateway 5 and electronic device 10 are described below with respect to Figs. 6-7.

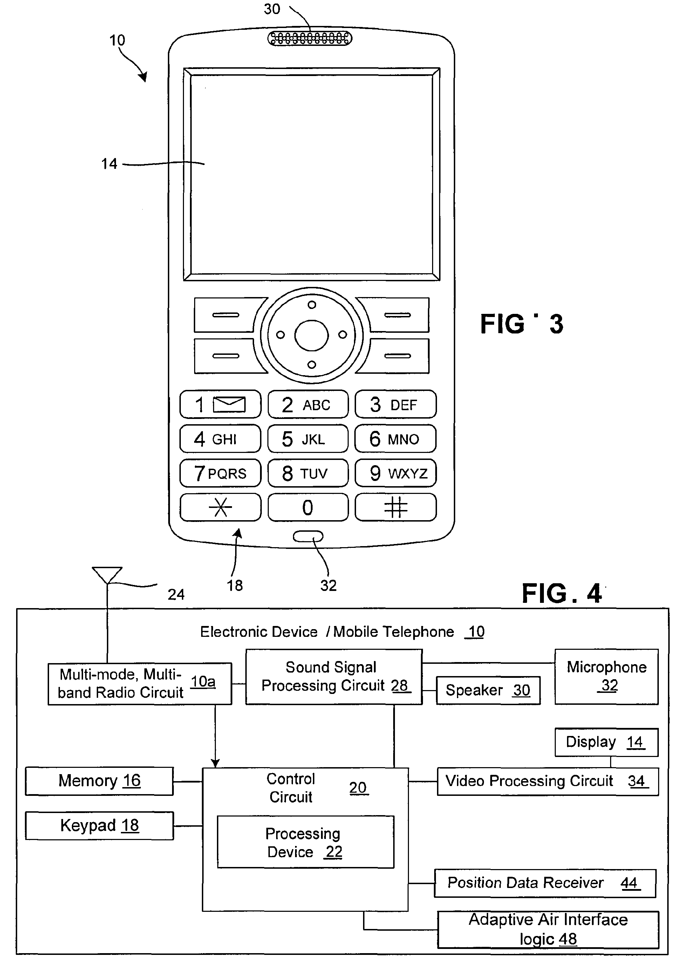

Referring now to Figs. 3 and 4, an electronic device 10 is shown. The electronic device of the illustrated embodiment is a mobile telephone and will be referred to as the mobile telephone 10. The mobile telephone 10 is shown as having a brick or block form factor, although other form factors, such as a "flip-open" form factor (e.g., a "clamshell" housing) or a slide-type form factor (e.g., a "slider" housing) also my be utilized.

The mobile telephone 10 may include a display 14. The display 14 displays information to a user such as operating state, time, telephone numbers, contact information, various navigational menus, etc., which enable the user to utilize the various features of the mobile telephone 10. The display 14 also may be used to visually display content received by the mobile telephone 10 and/or retrieved from a memory 16 (Fig. 4) of the mobile telephone 10.

A keypad 18 provides for a variety of user input operations. For example, the keypad 18 typically includes alphanumeric keys for allowing entry of alphanumeric information such as telephone numbers, phone lists, contact information, notes, etc. Keys or key-like functionality also may be embodied as a touch screen associated with the display 14.

The mobile telephone 10 includes call circuitry that enables the mobile telephone 10 to establish a call and/or exchange signals with a called/calling device, typically another mobile telephone or landline telephone. However, the called/calling device need not be another telephone, but may be some other device such as an Internet web server, content providing server, etc. Calls may take any suitable form. For example, the call could be a conventional call that is established over a cellular circuit-switched network or a voice over Internet Protocol (VoIP) call that is established over a packet-switched capability of a cellular network or over an alternative packet-switched network, such as WiFi (e.g., a network based on the IEEE 802.11 standard), WiMax (e.g., a network based on the IEEE 802.16 standard), etc.

Fig. 4 represents a functional block diagram of the mobile telephone 10. For the sake of brevity, generally conventional features of the mobile telephone 10 will not be described in great detail herein.

The mobile telephone 10 includes a primary control circuit 20 that is configured to carry out overall control of the functions and operations of the mobile telephone 10. The control circuit 20 may include a processing device 22, such as a CPU, microcontroller or microprocessor. The processing device 22 executes code stored in a memory (not shown) within the control circuit 20 and/or in a separate memory, such as the memory 16, in order to carry out operation of the mobile telephone 10. The memory 16 may include a read only memory area that is implemented using nonvolatile memory, and a random access or system memory area that is implemented using volatile memory.

Continuing to refer to Figs. 3 and 4, the mobile telephone 10 includes an antenna 24 coupled to a radio circuit 10a. The radio circuit 10a is a multi-mode, multi-band radio circuit and includes a radio frequency transmitter and receiver for transmitting and receiving signals via the antenna 24. The radio circuit 10a may be configured to operate in a mobile communications system and may be used to send and receive data and/or audiovisual content. Receiver types for interaction with a mobile radio network and/or broadcasting network include, but are not limited to, GSM, CDMA, WCDMA, GPRS, WiFi, WiMax, DVB-H, ISDB-T, etc., as well as advanced versions of these standards.

The mobile telephone 10 further includes a sound signal processing circuit 28 for processing audio signals transmitted by and received from the radio circuit 10a. Coupled to the sound processing circuit 28 are a speaker 30 and a microphone 32 that enable a user to listen and speak via the mobile telephone 10 as is conventional. The radio circuit 10a and sound processing circuit 28 are each coupled to the control circuit 20 so as to carry out overall operation. The sound processing circuit 28 may include any appropriate buffers, decoders, amplifiers and so forth.

The display 14 may be coupled to the control circuit 20 by a video processing circuit 34 that converts video data to a video signal used to drive the display 14. The video processing circuit 34 may include any appropriate buffers, decoders, video data processors and so forth.

The mobile telephone 10 also may include a position data receiver 44, such as a global positioning system (GPS) receiver, Galileo satellite system receiver or the like. The position data receiver 14 can determine a location of the mobile telephone 10 as is conventional.

The mobile telephone 10 also includes adaptive air interface logic 48. As described herein, the adaptive air interface logic 48 is operative to select the radio transceiver best suited for a particular communication session so as to provide the required data throughput while at the same time conserving power. Selection of the appropriate radio transceiver includes maintaining power to a low power radio transceiver and removing power to other radio transceivers when such transceivers are not in use.

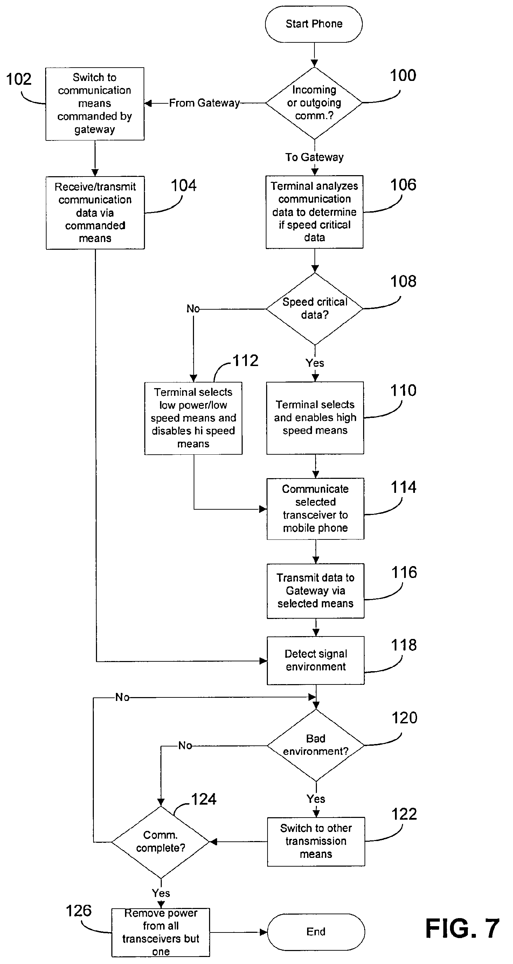

The adaptive air interface logic 48 may be in the form of code stored in memory and executed by the processing device 22. It will be apparent to a person having ordinary skill in the art of computer programming, and specifically in application programming for mobile telephones or other electronic devices, how to program a mobile telephone 10 to operate and carry out logical functions associated with the adaptive air interface logic 48 as described herein. Accordingly, details as to specific programming code have been left out for the sake of brevity. Also, while the adaptive air interface logic 48 is executed by the processing device 22 in accordance with a preferred embodiment of the invention, such functionality could also be carried out via dedicated hardware, firmware, software, or combinations thereof, without departing from the scope of the invention. Any of these implementations may be referred to as adaptive air interface logic 48. Further details regarding the adaptive air interface logic 48 are described below with respect to Fig. 7.

Moving now to Fig. 5, there is shown an exemplary gateway 5 in accordance with an embodiment of the invention. The gateway 5 provides a means for connecting to a network, such as a service provider's communication network, for example. In particular, the gateway 5 receives incoming communications from the network and provides them to the mobile phone 10, and receives outgoing communications from the mobile phone 10 and provides them to the network.

The gateway 5 also includes a control circuit 50 that is configured to carry out overall control of the functions and operations of the gateway 5. The control circuit 50 may include a processing device 52, such as a CPU, microcontroller or microprocessor. The processing device 52 executes code stored in a memory 54 in order to carry out operation of the gateway 5. The memory 54 may include a read only memory area that is implemented using nonvolatile memory, and a random access or system memory area that is implemented using volatile memory.

The gateway 5 further includes a broadband interface 56 for communicating with a base station controller 2, for example, and a multi-band, multi-mode radio circuit 5a for communicating with the electronic device(s) 10. As used herein, a broadband interface refers to a signaling method that includes or handles a relatively wide range of frequencies, which may be divided into channels or frequency bins. The broadband interface 56 may be any conventional broadband interface known in the art.

The multi-band, multi mode radio circuit 5a can include a plurality of radio transceivers capable of transmitting and receiving various types of radio signals via antenna 58. Preferably, the radio circuit 5a includes a first low power transceiver, such as a TDMA transceiver or the like that is suitable for voice communications, and a second transceiver that is suitable for high speed data communications (e.g., a WiFi transceiver). As will be appreciated, the gateway 5 may include other types of radio transceivers without departing from the scope of the invention.

The gateway 5 further includes gateway adaptive air interface logic 60 for managing the various transceivers of the multi-mode, multi band radio circuit 5a. In particular, the gateway adaptive air interface logic 60 enables the gateway 5 to select the most efficient transceiver for performing the requested communication.

As described above with respect to the mobile phone 10, the gateway adaptive air interface logic 60 also may be in the form of code stored in memory 54 and executed by the processing device 52. While in the preferred embodiment the gateway adaptive air interface logic is executed by the processing device 52, the gateway adaptive air interface logic 60 may be carried out via dedicated hardware, firmware, software, or combinations thereof, without departing from the scope of the invention. Any of these implementations may be referred to as gateway adaptive air interface logic 60. Further details regarding the gateway adaptive air interface logic are described below with respect to Fig. 6.

Moving now to Figs. 6 and 7, illustrated are exemplary logical operations for the adaptive interface logic 48 and 60. The flow chart of Figs. 6 and 7 may be thought of as depicting steps of a method carried out by the mobile telephone 10 and/or gateway 5. Although Figs. 6 and 7 show a specific order of executing functional logic blocks, the order of executing the blocks may be changed relative to the order shown. Also, two or more blocks shown in succession may be executed concurrently or with partial concurrence. Certain blocks also may be omitted. In addition, any number of functions, logical operations, commands, state variables, semaphores or messages may be added to the logical flow for purposes of enhanced utility, accounting, performance, measurement, troubleshooting, and the like. It is understood that all such variations are within the scope of the present invention.

Referring to Fig. 6, the logical flow for the gateway adaptive interface logic 60 may begin at block 70 where the gateway determines if the communication is an incoming communication (i.e., from the network) or an outgoing communication (i.e., from the mobile phone).

If the communication is determined to be an incoming communication, then at block 72 the data received from the network is analyzed to determine the best means in which to transmit the data to the mobile phone 10. For example, a voice transmission can be reliably communicated to the mobile phone 10 via a cellular air interface or a WiFi interface (or other high-speed interface). This is due to the fact that both transmission means can transmit data at speeds sufficient to provide satisfactory voice reproduction. Thus, for voice communications, the transceiver that consumes the least power and/or has the strongest signal may be selected (as opposed to the fastest available transmission means). In contrast to voice communications, a data transmission, such as a web surfing session, for example, typically requires some minimum data transfer rates to provide a satisfactory experience to the user. In this instance, a WiFi transceiver, WCDMA transceiver, or other high speed transceiver, if available, would be preferred over a TDMA transceiver, for example, as it can provide enhanced data transmission rates.

At block 74 it is determined which transceiver is best suited for the specific communication (e.g., is the communication speed critical or not speed critical). If the communication is speed critical (e.g., the communication relates to a web surfing session), then at block 76 a high speed transceiver (e.g., a WiFi transceiver, WCDMA transceiver, or other high speed transceiver) is selected for transmitting the data. On the other hand, if the communication is not speed critical (e.g., the communication is a voice communication), then at block 78 a low power/ low speed transceiver (e.g., a TDMA transceiver) is selected for transmitting the data.

At block 80, the transceiver selected by the gateway 5 is communicated to the mobile phone 10. More particularly, the low power transceiver, which is typically always powered in both the gateway 5 and the mobile phone 10, is used to communicate the selected transceiver to the mobile phone. For example, in IP based systems, various protocols are available for setting up communication sessions, examples of which include SIP (session initiation protocol) and SDP (session description protocol). Regardless of the type of protocol implemented in the system, a session negotiation or the like may occur between the gateway 5 and the mobile phone 10 that informs the mobile phone how the data will be communicated (e.g., via the TDMA transceiver, WiFi transceiver, etc.). The mobile phone 10 then can act on this information so as to apply power to the appropriate transceiver, as discussed below with respect to Fig. 7. At block 82 communications are established between the gateway 5 and the mobile phone 10 via the selected transceiver, and data may be exchanged between the respective devices.

At block 84, the gateway 5 and mobile phone 10 communicate with one another (via the selected interface or the low power interface) to determine if there are any issues with the transmission. In other words, the gateway 5 and/or mobile phone 10 determine if there is interference present that prevents efficient communication. If interference is present, appropriate action may be taken (e.g., a different transceiver may be selected for transmission). Further details regarding this communication or "handshake" are discussed below with respect to Fig. 7.

Moving back to block 70, if the communication is an outgoing communication (i.e., from the mobile phone 10 to the gateway 5), then at block 86 the gateway detects the communication means in which the mobile phone intends to communicate. More particularly, the mobile phone 10 can use the low power transceiver to inform the gateway 5 (e.g., via a SIP message, SDP message, or the like) which transceiver will be used for the communication session. Based on this information, the gateway 5 will act accordingly. For example, if the mobile phone 10 informs the gateway that the communication will be via the low power transceiver, then the gateway 5 simply monitors for the data via its low power transceiver. If the mobile phone 10 informs the gateway 5 that the communication will be via a WiFi transceiver, then the gateway will power its corresponding WiFi transceiver (if not already powered) and monitor for the data via the WiFi transceiver. Once the data is detected, then at block 88 the gateway receives and/or transmits data from/to the mobile phone via the selected transceiver. In order to conserve power, all unused transceivers (except the low power transceiver) may be powered off. Once communications have been established between the gateway 5 and the mobile phone 10, the method then moves to block 84 as discussed above.

Moving now to Fig. 7, the logical flow for the mobile phone's adaptive interface logic 48 may begin at block 100 where the mobile phone 10 determines if the communication is an incoming communication (i.e., from the gateway) or an outgoing communication (i.e., to the gateway).

If the communication is an incoming communication (i.e., from the gateway 5), then at block 102 the mobile phone 10 detects the communication means in which the gateway intends to transmit data. More particularly, the gateway 5 uses the low power transceiver to inform the mobile phone 10 (e.g., via a SIP message, SDP message, or the like) which transceiver will be used for the communication session. Based on this information, the mobile phone 10 will act accordingly. For example, if the gateway 5 informs the mobile phone 10 that the communication will be via the TDMA transceiver, then the mobile phone 10 simply monitors for the data via its TDMA transceiver. If the gateway 5 informs the mobile phone 10 that the communication will be via a WiFi transceiver, then the mobile phone 10 will power its corresponding WiFi transceiver and monitor for the data via the WiFi transceiver. Once the data is detected, then at block 104 the mobile phone 10 receives and/or transmits data from/to the gateway 5 via the selected transceiver. In order to conserve power, all unused transceivers (except the low power transceiver) may be powered off. Once communications have been established between the mobile phone 10 and gateway 5, the method then moves to block 118 as discussed below.

Moving back to block 100, if the communication is an outgoing communication (e.g., from the mobile phone to the gateway), then at block 106 the mobile phone 10 analyzes the intended communication data to determine if it is speed critical data (e.g., is the communication a voice communication, web related, file transfer, etc.). For example, voice transmissions may be considered non-speed critical data, as they can be reliably communicated to the gateway via the cellular air interface (typically the slowest interface on the mobile phone 10) or any of the transceivers of the radio circuit 10a without loss in performance. Thus, for voice communications, the transceiver that consumes the least power and/or has the strongest signal may be selected. In contrast to voice communications, a data transmission, such as a file transfer or a web surfing session, for example, typically requires some minimum data transfer rate to provide a satisfactory experience to the user. In this instance, a transceiver (e.g., a WiFi transceiver) having data throughput greater than the TDMA transceiver would be preferred as it can provide enhanced data transmission rates.

At block 108 it is determined which transceiver is best suited for the specific communication (e.g., is the communication speed critical or not speed critical). If the communication is speed critical (e.g., the communication relates to a web surfing session), then at block 110 a high speed transceiver (e.g., a WiFi transceiver) is selected for transmitting the data. On the other hand, if the communication is not speed critical (e.g., the communication is a voice communication), then at block 112 a low power/ low speed transceiver is selected for transmitting the data.

At block 114, the selected transceiver is communicated to the gateway 5. More particularly, the low power transceiver, which is typically always powered in both the gateway 5 and the mobile phone 10, is used by the mobile phone 10 to instruct the gateway 5 which transceiver the data will be communicated (e.g., via a SIP message, SDP message, or the like). The gateway 5 then can act on this information so as to apply power to the appropriate transceiver or, if the transceivers are already powered (typical for a gateway), then the gateway 5 may immediately receive the data. At block 116 communications are established between the mobile phone 10 and the gateway 5 via the selected transceiver, and data may be exchanged.

At block 118, the mobile phone analyzes the signal environment to determine if the signal quality is sufficient. A conventional way in which the signal environment may be monitored or measured is referred to as carrier quality index (CQI). The CQI is a measure of the quality of the common pilot channel. CQI is a well know method of measuring level of signal quality and, therefore, will not be described herein. As will be appreciated, other known methods of determining signal quality also may be implemented.

At block 120 a determination is made whether the quality of the signal environment is sufficient. If the quality is determined to be sufficient, then the method moves to block 124. If the quality is determined to be insufficient, then at block 122, the mobile phone 10 may command the gateway 5 to switch to a different communication means (e.g. a different transceiver or different communication parameters for the signals communicated on the current transceiver). The gateway 5 then may acknowledge this request, and the mobile phone 10 and gateway 5 may take appropriate action (e.g., change transceivers, change frequencies, etc.).

To minimize the likelihood of interference when using the WCDMA transceiver as the high speed transceiver, WCDMA can be enabled on an unlicensed spectrum (e.g. the ISM band). This can alleviate interference problems that may be encountered with existing WCDMA networks due to a limited number of spectrum channels. Alternatively, WCDMA/HSPA could be operated in a compressed mode in such a way that the radio 10a operates in a half-duplex mode so as to share spectrum and eliminate a duplexer.

At block 124, it is determined if the communication is complete (e.g., has all data been transfer, has the call terminated, is web surfing complete, etc.). If the communication is not complete, the method moves back to block 120. If the communication is complete, then the mobile phone 10 removes power from all transceivers except the low power transceiver and the method ends.

Accordingly, a system, device and method for providing low power consumption and high data throughput have been described. The system, device and method can prolong the battery life of electronic devices, without sacrificing performance.

A person having ordinary skill in the art of computer programming and applications of programming for mobile communication systems would be able in view of the description provided herein to program a mobile phone 10 and gateway 5 to operate and to carry out the functions described herein. Accordingly, details as to the specific programming code have been omitted for the sake of brevity. Also, while software in the memory of the mobile phone 10 and gateway 5 may be used to allow the respective devices to carry out the functions and features described herein in accordance with the preferred embodiment of the invention, such functions and features also could be carried out via dedicated hardware, firmware, software, or combinations thereof, without departing from the scope of the invention.

Specific embodiments of the invention have been disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for" is intended to evoke a means-plus-function reading of an element and a claim, whereas, any elements that do not specifically use the recitation "means for", are not intended to be read as means-plus-function elements, even if the claim otherwise includes the word "means".

Computer program elements of the invention may be embodied in hardware and/or in software (including firmware, resident software, micro-code, etc.). The invention may take the form of a computer program product, which can be embodied by a computer-usable or computer-readable storage medium having computer-usable or computer-readable program instructions, "code" or a "computer program" embodied in the medium for use by or in connection with the instruction execution system. In the context of this document, a computer-usable or computer-readable medium may be any medium that can contain, store, communicate, propagate, or transport the program for use by or in connection with the instruction execution system, apparatus, or device. The computer-usable or computer-readable medium may be, for example but not limited to, an electronic, magnetic, optical, electromagnetic, infrared, or semiconductor system, apparatus, device, or propagation medium such as the Internet. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner. The computer program product and any software and hardware described herein form the various means for carrying out the functions of the invention in the example embodiments.

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A wireless terminal (5, 10), comprising:
a multi-mode radio circuit (5a, 10a) including a plurality of different transceivers for communicating over a plurality of different wireless standards, wherein a first transceiver of the plurality of transceivers requires less power than other transceivers of the plurality of transceivers;
a processor (22, 52) and memory (16, 54); and
logic stored in memory and executable by the processor, **characterized by** said logic including
logic that analyzes a communications request intended for a receiving device to determine a minimum speed requirement of the communication request;
logic that selects a transceiver of the plurality of transceivers based on the minimum speed requirement of the communication request; and
logic that uses the first transceiver to communicate the selected transceiver to a receiving device.

2. The terminal according to claim 1, further comprising logic that commands removal of power from the other transceivers when a communication corresponding to the other transceivers is not ongoing.

3. The terminal according to any one of claims 1-2, further comprising:
logic that commands application of power to the selected transceiver; and
logic that transmits the data to the receiving device via the selected transceiver.

4. The terminal according to any one of claims 1-3, further comprising a broadband interface (56) for connecting to a network.

5. The terminal according to any one of claims 1-4, wherein the terminal is at least one of a mobile phone, pager, electronic organizer, personal digital assistant, or smartphone.

6. A system for minimizing power consumption in portable electronic devices, comprising:
a wireless gateway (5) for providing access to a network, said gateway including a first multi-mode radio circuit (5a);
a portable electronic device (10) including a second multi-mode radio circuit (10a),
wherein the first and second radio circuits each include a plurality of transceivers, and one transceiver of each of the first and second radio circuits requires less power than respective other transceivers of the first and second radio circuits, and
**characterized in that** at least one of the gateway or the portable electronic device is operative to
a) analyze a communications request intended for a receiving device to determine a minimum speed requirement of the communication request;
b) select a transceiver of the respective plurality of transceivers based on the minimum speed requirement of the communication request; and
b) communicate the selected transceiver to the other of the gateway or the portable electronic device via the respective one transceiver.

7. The system according to claim 6, wherein at least one of the gateway or the portable electronic device is operative to c) remove power from the respective other transceivers when a communication corresponding to the other transceivers is not ongoing.

8. The system according to claim 7, wherein at least one of the gateway or the portable electronic device is operative to
d) command application of power to the selected transceiver; and
e) transmit the data to the other of the gateway or the portable electronic device via the selected transceiver.

9. A method of minimizing power consumption in a terminal (5, 10) that includes a multi-mode radio circuit (5a, 10a) having a plurality of different transceivers for communicating over a plurality of different wireless standards, wherein a first transceiver of the plurality of transceivers requires less power than other transceivers of the plurality of transceivers, **characterized by**:
analyzing a communications request intended for a receiving device to determine a minimum speed requirement of the communication request;
selecting a transceiver of the plurality of transceivers based on the minimum speed requirement of the communication request; and
using the first transceiver to communicate the selected transceiver to a receiving device.

10. The method according to claim 9, further comprising removing power from the other transceivers when a communication corresponding to the other transceivers is not ongoing.

11. The method according to claim 10, further comprising:
applying power to the selected transceiver; and
transmitting the data to the receiving device via the selected transceiver.

12. The method according to any one of claims 9-11, wherein the terminal is a gateway (5) operative to provide access to the network.

## Patentansprüche

1. Drahtloses Endgerät (5, 10), umfassend:
einen Multimode-Funkkreis (5a, 10a) enthaltend eine Mehrzahl verschiedener Transceiver zur Kommunikation über eine Mehrzahl verschiedener drahtloser Standards, wobei ein erster Transceiver der Mehrzahl von Transceivern weniger Strom benötigt als andere Transceiver der Mehrzahl von Transceivern;
einen Prozessor (22, 52) und Speicher (16, 54); und
eine Logik, die im Speicher gespeichert und durch den Prozessor ausführbar ist, **gekennzeichnet durch** die Logik, die enthält
eine Logik, die eine Kommunikationsanforderung analysiert, welche für eine Empfangsvorrichtung zur Bestimmung einer Mindestgeschwindigkeitsanforderung der Kommunikationsanforderung vorgesehen ist;
eine Logik, die einen Transceiver der Mehrzahl von Transceivern basierend auf der Mindestgeschwindigkeitsanforderung der Kommunikationsanforderung auswählt; und
eine Logik, die den ersten Transceiver dazu benutzt, um den ausgewählten Transceiver mit einer Empfangsvorrichtung zu kommunizieren.

2. Endgerät nach Anspruch 1, zusätzlich umfassend eine Logik, die eine Entfernung von Strom von den anderen Transceivern anordnet, wenn eine den anderen Transceivern entsprechende Kommunikation nicht fortlaufend erfolgt.

3. Endgerät nach einem der Ansprüche 1 bis 2, zusätzlich umfassend:
eine Logik, die ein Anlegen von Strom auf den ausgewählten Transceiver anordnet; und
eine Logik, welche über den ausgewählten Transceiver die Daten an die Empfangsvorrichtung überträgt.

4. Endgerät nach einem der Ansprüche 1 bis 3, zusätzlich umfassend eine Breitbandschnittstelle (56) zum Verbinden mit einem Netz.

5. Endgerät nach einem der Ansprüche 1 bis 4, wobei das Endgerät zumindest eines von einem Mobiltelefon, Pager, elektronischen Organizer, Minicomputer oder Smartphone ist.

6. System zur Verminderung des Stromverbrauchs in tragbaren elektronischen Vorrichtungen, umfassend:
ein drahtloses Gateway (5) zum Bereitstellen eines Zugangs zu einem Netz, welches Gateway einen ersten Multimode-Funkkreis (5a) enthält;
eine tragbare elektronische Vorrichtung (10) enthaltend einen zweiten Multi-mode-Funkkreis (10a),
wobei der erste und zweite Funkkreis jeweils eine Mehrzahl von Transceivern enthalten, und ein Transceiver jedes des ersten und zweiten Funkkreises weniger Strom benötigt als jeweilige andere Transceiver des ersten und zweiten Funkkreises, und
**dadurch gekennzeichnet, dass** zumindest eines/eine des Gateways oder
der tragbaren elektronischen Vorrichtung funktionsfähig ist, um
a) eine Kommunikationsanforderung zu analysieren, welche für eine Empfangsvorrichtung zur Bestimmung einer Mindestgeschwindigkeitsanforderung der Kommunikationsanforderung vorgesehen ist;
b) einen Transceiver der jeweiligen Mehrzahl von Transceivern basierend auf der Mindestgeschwindigkeitsanforderung der Kommunikationsanforderung auszuwählen; und
b) den ausgewählten Transceiver mit dem Gateway oder der tragbaren elektronischen Vorrichtung über den jeweiligen einen Transceiver zu kommunizieren.

7. System nach Anspruch 6, wobei zumindest eines/eine des Gateways oder der tragbaren elektronischen Vorrichtung funktionsfähig ist, um c) den Strom von den jeweiligen anderen Transceivern zu entfernen, wenn eine den anderen Transceivern entsprechende Kommunikation nicht fortlaufend erfolgt.

8. System nach Anspruch 7, wobei zumindest eines/eine des Gateways oder der tragbaren elektronischen Vorrichtung funktionsfähig ist, um
d) das Anlegen von Strom auf den ausgewählten Transceiver anzuordnen; und
e) die Daten an das Gateway oder die tragbare elektronische Vorrichtung über den ausgewählten Transceiver zu übertragen.

9. Verfahren zur Verminderung von Stromverbrauch in einem Endgerät (5, 10), enthaltend einen Multimode-Funkkreis (5a, 10a) mit einer Mehrzahl von verschiedenen Transceivern zur Kommunikation über eine Mehrzahl verschiedener drahtloser Standards, wobei ein erster Transceiver der Mehrzahl von Transceivern weniger Strom benötigt als andere Transceiver der Mehrzahl von Transceivern, **gekennzeichnet durch**:
Analysieren einer Kommunikationsanforderung, welche für eine Empfangsvorrichtung zur Bestimmung einer Mindestgeschwindigkeitsanforderung der Kommunikationsanforderung vorgesehen ist;
Auswählen eines Transceivers der Mehrzahl von Transceivern basierend auf der Mindestgeschwindigkeitsanforderung der Kommunikationsanforderung; und
Verwenden des ersten Transceivers zum Kommunizieren des ausgewählten Transceivers mit einer Empfangsvorrichtung.

10. Verfahren nach Anspruch 9, zusätzlich umfassend Entfernung von Strom von den anderen Transceivern, wenn eine den anderen Transceivern entsprechende Kommunikation nicht fortlaufend erfolgt.

11. Verfahren nach Anspruch 10, zusätzlich umfassend:
Anlegen von Strom auf den ausgewählten Transceiver; und
Übertragen der Daten an die Empfangsvorrichtung über den ausgewählten Transceiver.

12. Verfahren nach einem der Ansprüche 9 bis 11, wobei das Endgerät ein Gateway (5) ist, das funktionsfähig ist, um Zugang zum Netz bereitzustellen.

## Revendications

1. Terminal sans fil (5, 10), comprenant :
un circuit radio multimode (5a, 10a) comprenant une pluralité d'émetteurs-récepteurs différents pour communiquer sur une pluralité de normes sans fil différentes, dans lequel un premier émetteur-récepteur de la pluralité d'émetteurs-récepteurs exige moins de puissance que les autres émetteurs-récepteurs de la pluralité d'émetteurs-récepteurs ;
un processeur (22, 52) et une mémoire (16, 54) ; et
une logique stockée en mémoire et exécutable par le processeur, **caractérisé en ce que** ladite logique comprend
une logique qui analyse une demande de communications prévue pour permettre à un dispositif de réception de déterminer une exigence de vitesse minimale de la demande de communication ;
une logique qui sélectionne un émetteur-récepteur parmi la pluralité d'émetteurs-récepteurs sur la base de l'exigence de vitesse minimale de la demande de communication ; et
une logique qui utilise le premier émetteur-récepteur pour mettre en communication l'émetteur-récepteur sélectionné avec un dispositif de réception.

2. Terminal selon la revendication 1, comprenant en outre une logique qui commande le retrait de puissance des autres émetteurs-récepteurs lorsqu'une communication correspondant aux autres émetteurs-récepteurs n'est pas en cours.

3. Terminal selon l'une quelconque des revendications 1 à 2, comprenant en outre :
une logique qui commande l'application de puissance à l'émetteur-récepteur sélectionné ; et
une logique qui transmet les données au dispositif de réception par l'intermédiaire de l'émetteur-récepteur sélectionné.

4. Terminal selon l'une quelconque des revendications 1 à 3, comprenant en outre une interface large bande (56) pour connexion à un réseau.

5. Terminal selon l'une quelconque des revendications 1 à 4, où le terminal est au moins un parmi un téléphone mobile, un radiomessageur, un agenda électronique, un assistant numérique individuel ou un téléphone intelligent.

6. Système destiné à réduire à un minimum la consommation de puissance dans des dispositifs électroniques portatifs, comprenant :
une passerelle sans fil (5) pour permettre d'accéder à un réseau, ladite passerelle comprenant un premier circuit radio multimode (5a) ;
un dispositif électronique portatif (10) comprenant un second circuit radio multimode (10a),
dans lequel les premier et second circuits radio comprennent chacun une pluralité d'émetteurs-récepteurs et un émetteur-récepteur de chacun des premier et second circuits radio exige moins de puissance que les autres émetteurs-récepteurs respectifs des premier et second circuits radio et
**caractérisé en ce qu'**au moins un parmi la passerelle ou le dispositif électronique portatif est opérationnel pour
a) analyser une demande de communications prévue pour permettre à un dispositif de réception de déterminer une exigence de vitesse minimale de la demande de communication ;
b) sélectionner un émetteur-récepteur de la pluralité respective d'émetteurs-récepteurs sur la base de l'exigence de vitesse minimale de la demande de communication ; et
b) mettre en communication l'émetteur-récepteur sélectionné avec l'autre parmi la passerelle ou le dispositif électronique portatif par l'intermédiaire dudit émetteur-récepteur respectif.

7. Système selon la revendication 6, dans lequel au moins l'un parmi la passerelle ou le dispositif électronique portatif est opérationnel pour c) retirer la puissance des autres émetteurs-récepteurs respectifs lorsqu'une communication correspondant aux autres émetteurs-récepteurs n'est pas en cours.

8. Système selon la revendication 7, dans lequel au moins l'un parmi la passerelle ou le dispositif électronique portatif est opérationnel pour
d) commander l'application de puissance à l'émetteur-récepteur sélectionné ; et
e) transmettre les données à l'autre parmi la passerelle ou le dispositif électronique portatif par l'intermédiaire de l'émetteur-récepteur sélectionné.

9. Procédé de réduction à un minimum de la consommation de puissance dans un terminal (5, 10) qui comprend un circuit radio multimode (5a, 10a) possédant une pluralité d'émetteurs-récepteurs différents pour communiquer sur une pluralité de normes sans fil différentes, dans lequel un premier émetteur-récepteur de la pluralité d'émetteurs-récepteurs exige moins de puissance que les autres émetteurs-récepteurs de la pluralité d'émetteurs-récepteurs, **caractérisé par** :
l'analyse d'une demande de communications prévue pour permettre à un dispositif de réception de déterminer une exigence de vitesse minimale de la demande de communication ;
la sélection d'un émetteur-récepteur de la pluralité d'émetteurs-récepteurs sur la base de l'exigence de vitesse minimale de la demande de communication ; et
l'utilisation du premier émetteur-récepteur pour mettre en communication l'émetteur-récepteur sélectionné avec un dispositif de réception.

10. Procédé selon la revendication 9, comprenant en outre le retrait de puissance des autres émetteurs-récepteurs lorsqu'une communication correspondant aux autres émetteurs-récepteurs n'est pas en cours.

11. Procédé selon la revendication 10, comprenant en outre :
l'application de puissance à l'émetteur-récepteur sélectionné ; et
la transmission des données au dispositif de réception par l'intermédiaire de l'émetteur-récepteur sélectionné.

12. Procédé selon l'une quelconque des revendications 9 à 11, dans lequel le terminal est une passerelle (5) opérationnelle pour permettre d'accéder au réseau.
